Europäisches Patentamt

European Patent Office

Office européen des brevets

(11) Veröffentlichungsnummer: **0 062 815**
**B1**

(19)

(12) **EUROPÄISCHE PATENTSCHRIFT**

(45) Veröffentlichungstag der Patentschrift:
03.09.86

(51) Int. Cl.⁴: **B 32 B 27/32**

(21) Anmeldenummer: **82102587.1**

(22) Anmeldetag: **27.03.82**

(54) Siegelbare Mehrschichtfolien mit geringer Gasdurchlässigkeit und daraus hergestellte Verpackungen.

(30) Priorität: **08.04.81 DE 3114171**

(43) Veröffentlichungstag der Anmeldung:
20.10.82 Patentblatt 82/42

(45) Bekanntmachung des Hinweises auf die Patenterteilung:
03.09.86 Patentblatt 86/36

(84) Benannte Vertragsstaaten:
**AT BE CH DE FR GB IT LI NL SE**

(56) Entgegenhaltungen:
EP-A-0 027 586
WO-A-81/00230
FR-A-2 235 797
FR-A-2 329 426
FR-A-2 460 856

(73) Patentinhaber: **Wolff Walsrode Aktiengesellschaft,
Postfach, D-3030 Walsrode 1 (DE)**

(72) Erfinder: **Rosenthal, Heinrich, Nordsunderberg 5,
D-3030 Walsrode (DE)**
Erfinder: **Schinkel, Ingo, Witternstrasse 14, D-3030
Walsrode (DE)**
Erfinder: **Eger, Günter, Ahornstrasse 39, D-3036
Bomlitz (DE)**
Erfinder: **Bair, Wolfgang, Hollige 14a, D-3030
Walsrode 23 (DE)**

(74) Vertreter: **Kutzenberger, Helga, Dr., c/o Bayer AG
Konzernverwaltung RP Patentabteilung, D-5090
Leverkusen, Bayerwerk (DE)**

LIBER, STOCKHOLM 1986

## Beschreibung

Die vorliegende Erfindung betrifft eine siegelbare gereckte Mehrschichtfolie, die sich wegen ihrer Gassperreigenschaften besonders als Verpackungsfolie für solche Güter eignet, die geringe Gasdurchlässigkeit und Aromaschutz erfordern.

Die Verwendung von Verbundfolien aus Polyolefinen mit einer siegelbaren Schicht aus Ethylenhomo- oder -copolymerisaten als Verpackungsfolie ist seit langem bekannt. Es wurde auch bereits versucht, die Gasdurchlässigkeit solcher Verbundfolien durch Einbau einer Schicht aus verseiftem Ethylenvinylacetat zu verbessern. So wird in der DE-A-2 644 209 eine Verbundfolie aus Polypropylen, einer Raftvermittlerschicht aus modifiziertem Polyolefin, einer Schicht aus verseiftem Ethylenvinylacetatcopolymerisat und gegebenenfalls einer heißsiegelfähigen Schicht aus Polyolefinen beschrieben. Diese Verbundfolien haben aber den großen Nachteil, daß ihre unbefriedigenden Gleiteigenschaften bei höheren Abpackgeschwindigkeiten zu fehlerhaften Siegelnähten, Fehleinschlägen und Belägen auf den Maschinenteilen der Abpackmaschinen durch Abrieb führen.

Außerdem werden in der FR-A-24 60 856 Verbundfolien beschrieben, die aber als Verpackungsmaterial für verderbliche Güter wegen ihrer fehlenden Gassperreigenschaften ungeeignet sind. Diese Verbundfolien können in ihrem Glutverhalten durch Zugabe einer Reihe von Additiven beeinflußt werden, wobei sich aus der Vielzahl der möglichen Additivkombinationen weder die erfindungsgemäß verwendeten Kombinationen in naheliegender Weise ergeben noch deren überlegene Wirkung, wie Tabelle 2 zu entnehmen, zu erwarten war.

Vom Gegenstand der älteren, nicht vorveröffentlichten Ep-A 1-00 27 586 sind die nachfolgend beschriebenen erfindungsgemäßen Mehrschichtfolien durch ihren Schichtaufbau abgegrenzt.

Erst durch Bereitstellung der erfindungsgemäßen Verbundfolien gelingt es, die aufgeführten Nachteile zu beheben und ein Verpackungsmaterial zur Verfügung zu stellen, das sich aufgrund seiner ausgezeichneten Gleitfähigkeit und Maschinengängigkeit auch für schnell arbeitende Verpackungsmaschinen eignet und aufgrund der geringen Gasdurchlässigkeit insbesondere für verderbliche Lebensmittel eingesetzt werden kann.

Gegenstand der Erfindung sind daher heißsiegelbare Verbundfolien aus einer biaxial gereckten Polypropylenfolie als Basisfolie, einer Haftvermittlerschicht aus modifiziertem Polyolefin, einer Gassperrschicht aus verseiftem Ethylenvinylacetatcopolymerisat und einer Heißsiegelschicht aus Olefinpolymerisaten, dadurch gekennzeichnet, daß die Basisfolie mindestens auf einer Oberfläche eine gegebenenfalls wenigstens monoaxial orientierte Schichtkombination trägt, die sich zusammensetzt aus

A) einer heißsiegelbaren Außenschicht aus Polyethylen oder einem Ethylencopolymerisat mi wenigstens 3 Gew.-% vorzugsweise 4 Gew.-% Ethylen;

B) einer Haftvermittlerschicht aus modifiziertem Polyolefin;

C) einer Gassperrschicht aus verseiftem Ethylenvinylacetatcopolymerisat mit 50 bis 80 Mol-% Vinylacetateinheiten, die zu wenigstens 90 % verseift sind;

D) einer Haftvermittlerschicht aus modifiziertem Polyolefin und

E) einer Schicht aus Polyethylen oder einem Ethylencopolymerisat mit wenigstens 3 Gew.-% vorzugsweise wenigstens 4 Gew.-% Ethylen,

wobei die Schicht A eine Additivkombination bestehend aus

a) 0,3 bis 1 Gew.-%, vorzugsweise 0,4 - 0,7 Gew.-%, bezogen auf die siegelbare Schicht, eines langkettigen aliphatischen Amins,

b) 0,1 bis 0,7 Gew.-%, vorzugsweise 0,15 - 0,5 Gew.-%, bezogen auf die siegelbare Schicht, eines dispergierten mit dem Polyethylen bzw. Ethylencopolymerisat unverträglichen thermoplastischen Polymers mit einem Erweichungspunkt im Bereich von max. 50° C unterhalb oder oberhalb des Erweichungspunkts des Polyethylen bzw. Ethylencopolymerisats,

c) 0,1 bis 1,2 Gew.-%, vorzugsweise 0,2 - 0,7 Gew.-%, bezogen auf die siegelbare Schicht, eines Polydialkylsiloxans

enthält und

die Basisfolie auf ihrer anderen Oberfläche gegebenenfalls eine Schicht A, eine Schichtkombination A bis E oder B und C oder eine Schicht aus einer Mischung aus den Polymeren der Schicht B und C trägt.

Gegebenenfalls können die Schichten A und B und/oder D und E oder die Schichten B und C bzw. C und D zu einer Schicht durch Vermischen der entsprechenden Polymeren vereinigt werden

Das Polypropylen der Kernfolie ist vorzugsweise ein isotaktisches Polypropylen mit einer Dichte von 0,90 bis 0,91 g/cm$^3$ und einem Schmelzflußindex von 1 bis 4 g/l0 min bei 230° C/2,16 kp/cm$^2$ Druck (nach DIN 53 735).

Das Siegelschichtpolymere besteht aus einem Ethylenhomo- oder -Copolymerisat, wobei vorzugsweise ein Polyethylen hoher Dichte oder statistiche Ethylen/Propylen-Copolymeres mit wenigstens 3 Gew.-% Ethylen, vorzugsweise 94 -96, besonders bevorzugt 95 Gew.-% Propylen und 4 - 6, besonders bevorzugt 5 Gew.-% Ethylen eingesetzt wird.

Die Dichte des Siegelschichtpolymeren sollte vorzugsweise im Bereich von 0,895 bis 0,960 g/cm$^3$ und einem Schmelzflußindex von 1 bis 7 g/l0 min bei 190° C/2,16kp/cm$^2$ Druck und einen Kristallitschmelzpunkt je nach Typ im Bereich vor 125 bis 148° C (unter Polariationsmikroskop) aufweisen.

Als Komponente a) der Additivkombination werden vorzugsweise langkettige, aliphatische tertiäre Amine, die gegebenenfalls einfach ungesättigt sind, vorzugsweise tertiäre Amine, deren aliphatischer Rest eine C-Kettenlänge von $C_{12}$ bis $C_{18}$ aufweist und die mit zwei Hydroxyalkyl-($C_1$-$C_4$)-Gruppen substituiert sind, verwendet. N,N-Bis-(2-hydroxy-ethyl)-($C_{12}$-$C_{16}$)-alkylamine sind besonders bevorzugt.

Das mit dem Siegelpolymeren unverträgliche thermoplastische Polymere sollte einen Erweichungspunkt im Bereich von max. 50° C unterhalb oder oberhalb des Erweichungspunktes des Siegelpolymeren aufweisen und im Siegelpolymeren dispergiert, vorzugsweise mit einer Teilchengröße von 0,01 bis 4µm, besonders bevorzugt von 0,1 bis 2µm, vorliegen. Die Dispergierung des unverträglichen Polymeren in der Siegelmasse erfolgt nach üblichen, bekannten Methoden vorzugsweise eignen sich thermoplastische Harze wie hochmolekulares Polyethylen mit hoher Dichte und einem Erweichungspunkt vorzugsweise von ungefähr 129° C Ethylen-Methacrylsäure-Copolymer (90 bis 99° C), Polylaurinlactamid (≈180° C), Acrylnitril-Butadien-Methacrylat-Copolymere (≈ 80° C), Polyethylenvinylalkohol-Copolymere (≈185° C). Ganz besonders bevorzugt sind Ethylen/Methacrylsäure-Copolymere, die gegebenenfalls ganz oder teilweise als Alkalimetallsalze oder Zn-Salze, vorliegen können, oder Polylaurinlactamid.

Das als Additivkomponente c) verwendete Polydialkylsiloxan sollte von $10^5$ - $10^6$ mPas vorzugsweise eine Viskosität von mindestens 1 Mill. mPas bei 20° C aufweisen. Polydimethylsiloxan wird ganz besonders bevorzugt eingesetzt.

Die Gassperrschicht besteht aus einem Ethylen/Vinylacetat-Copolymerisat, das 50 bis 80 Mol-%, bevorzugt 60 - 75 Mol-%. Vinylacetateinheiten, die zumindestens zu 90 %, vorzugsweise zu mehr als 95 %, verseift sind.

Die Grenzviskositätszahl [µ] des Polymeren, gemessen in einer Lösungsmittelmischung aus 85 Gew.-% Phenol und 15 Gew.-% Wasser, sollte vorzugsweise zwischen 0,07 und 0,17 1/g, besonders bevorzugt zwischen 0,09 und 0,15 1/g liegen.

Zur Herstellung der Haftvermittlerschicht werden modifizierte Polyolefine eingesetzt. Vorzugsweise sind dies Polyolefine mit Carboxylgruppen wie z.B. Polypropylen oder Polyethylen, die mit mindestens einem Monomer aus der Gruppe der α,β-einfach ungesättigten Dicarbonsäuren, wie z.B. Maleinsäure, Fumarsäure, Itaconsäure oder deren Säureanhydride, Säureester, Säureamide und Säureimide aufgepfropft enthalten, Copolymerisate von Ethylen mit α,β-einfach ungesättigten Carbonsäuren, wie Acrylsäure, Methycrylsäure und/oder deren Metallsalzen (Zn, Na) und/oder deren Alkyl($C_1$-$C_4$) estern oder entsprechende Pfropfpolymere auf Polyolefine wie Polyethylen oder Polypropylen oder bereits beschriebene verseifte Mischpolymerisate, die mit einem Monomer der o.g. ungesättigten Säuren pfropfpolymerisiert sind.

Besonders bevorzugt sind Polyolefine wie Propylen oder Copolymerisate von Propylen und Ethylen, mit maximal 1,0 Gew.-% aufgepfropften α, β-einfach ungesättigtem Dicarbonsäureanhydrid wie Maleinsäureanhydrid oder deren verseifte Mischpolymerisate.

Wird das Haftvermittlerpolymere entweder in die siegelbare Schicht A oder in die Gassperrschicht C eingearbeitet, so werden von dem modifizierten Polyolefin bis 40 Gew.-%, vorzugsweise 25 bis 30 Gew.-%, bezogen auf schichtbildende Polymere, zur Herstellung der entsprechenden Polymerisate verwendet.

Durch den Einsatz der erfindungsgemäßen Additivkombination gelingt es, Mehrschichtfolien nicht nur mit einer sehr guten Maschinengängigkeit und einer sehr guten Gleitfähigkeit herzustellen, sondern auch auf die übliche elektrische Vorbehandlung der Folie zu verzichten, die bekanntlich die Gleitwerte der Folie verschlechtert. Auch ist kein Zerkratzen oder Eintrüben der Folie, wie es bei Abstandshaltern auf Basis anorganischer Pulver auftritt, zu beobachten. Überraschenderweise tritt auch keine Beeinträchtigung der Beklebbarkeit der Folie auf, z.B. mit einem Aufreißstreifen, obwohl dies beim Einsatz von Polyalkylsiloxanen zu befürchten war.

Es war daher nicht zu erwarten, daß mit der erfindungsgemäßen Additivkombination die gewünschte Verbesserung der bekannten Mehrschichtfolien erreicht wird, zumal auch der Einsatz bekannter Gleitmittel, wie z.B. gesättigte oder ungesättigte Fettsäureamide sowie höhermolekulare substituierte Fettsäureamide mit Schmelzpunkten zwischen 70 und 150° C, wie z.B. Erucasäureamide, Ölsäureamid, Alkyl-Di-Fettsäureamide, N, N-polyethoxylierte Fettsäureamide keine ausreichende Gleitfähigkeit auf den schnellaufenden Verpackungsmaschinen bringt.

Ein weiterer Gegenstand der Erfindung sind Verpackungen vorzugsweise für sauerstoffempfindliche Lebensmittel, aus den erfindungsgemäßen Mehrsichtfolien.

Die Einarbeitung der Additive in das Siegelschichtpolymere kann durch Mischen und die Herstellung der Mehrschichtfolie kann nach üblichen Verfahren wie Laminierung oder Schmelzextrusion erfolgen.

Vorteilhaft ist die direkte Zugabe der Additive zum Siegelschichtpolymeren, da so eine aufwendige Additiv-Masterbatch-Technik vermieden wird.

Weiterhin ist es vorteilhaft, die Schichtkombination getrennt von der Polypropylen-Filmextrusion in einer späteren Stufe des Reckprozesses auf die Basisfolie aufzubringen.

Für die biaxiale Reckung können die üblichen Reckverfahren verwendet werden. Die Längsreckung wird vorzugsweise im Verhältnis 5:1 bis 7:1 und die Querreckung im Verhältnis 7:1 bis 10:1 vorgenommen.

In der erfindungsgemäßen Mehrschichtfolie sollte die Polypropylenbasisfolie vorzugsweise eine Dicke von 20 bis 50μm und die Schichtkombination vorzugsweise eine Dicke von 2 bis 6μm, besonders bevorzugt 3,5 bis 5μm, wobei die Siegelschicht eine von 0,8 bis 2μm, besonders bevorzugt von 1μm, die Haftvermittlerschicht eine Dicke von 0,1 bis 1μm, vorzugsweise 0,4 bis 0,6μm, und die Gassperrschicht eine Dicke von 0,2 bis 1,2μm, besonders bevorzugt 0,6 bis 0,8μm aufweisen.

Vorzugsweise sind die Schichten B und D bzw. A und E identischen Polymeren aufgebaut.

## Prüfmethoden

Der Verpackungslauf wird nach den vom Maschinenpersonal aufgestellten Kriterien wie Vorschub, Einschlag und Abriebfreiheit beurteilt. Treten keine Störungen hinsichtlich dieser Merkmale beim Abpacken in der höheren Geschwindigkeitsstufe auf, erfüllt die Folie die Anforderungen. Schon eine gelegentliche Störung bedeutet, daß die Folie ungeeignet ist. Es wird vorausgesetzt, daß Störungen durch optimale Einstellung der Packungsmaschine vor dem Versuchslauf ausgeschlossen werden.

Unter Siegelfestigkeit wird die Kraft verstanden, die erforderlich ist, um eine unter definierten Bedingungen (50 N/cm$^2$/0,5 sec, 130°C, glatte Siegelbacken) hergestellte Siegelnaht zu trennen. Die Siegelfestigkeit wird in Newton (N) angegeben und auf einen 15 mm breiten Prüfstreifen bezogen.

Das antistatische Verhalten einer Folie wird nach dem Aschetest beurteilt. Der Aschetest wird nach einer gewissen Aufladung der Folie - durch dreimaliges Reiben mit einem Wolltuch in einer Richtung - vorgenommen.

Die Folie ist ausreichend antistatisch, wenn Zigarettenasche aus 3 cm Entfernung von einer aufgeladenen Folie nicht angezogen wird.

Die Messung der O$_2$-Durchlässigkeit wird nach DIN 53 380 durchgeführt.

Die Trübung wird nach ASTM D 1003-52 gemessen.

Die Reibungszahl wird nach DIN 53 375 bestimmt.

## Beispiel 1

Zur Herstellung einer Schichtkombination wurden für die Schicht A in 98,7 Gew.-% eines Propylen-Ethylen-Copolymerisates mit 4,5 Gew.-% Ethylen, der Dichte 0,90 g/cm, mit dem Schmelzindex 5 g/10in bei 230°C/2,16 kp/cm$^2$ und dem Kristallitschmelzpunkt 140°C 0,5 Gew.-% N,N-Bis-(2-hydroxyethyl)-(C$_{12}$-C$_{16}$)-alkylamin, 0,5 Gew.-% eines Ethylen-Methacrylsäure-Copolymeren, bei dem die Carboxyl-Gruppen teilweise über Zn-Salze vorliegen, mit dem Schmelzindex von 5 g/10 min bei 190°C/1 kp/cm$^2$ und dem Schmelzpunkt von 99°C und 0,3 Gew.-% eines Polydimethylsiloxans der Dichte von 0,985 g/cm$^3$ bei 20°C und einer Viskosität von 10$^6$ m. Pa. s bei 20°C eingearbeitet und mit einem modifizierten Polypropylen wie einem verseiften Mischpolymerisat mit 0,7 Gew.-% aufgepfopften Maleinsäureanhydrid und einem Schmelzindex von 5 g/10 min bei 250°C/216 kp/cm$^2$ für die Haftvermittlerschichten und einem Ethylen/Vinylacetat-Copolymerisat mit 55 Mol-% Vinylacetateinheiten, die zu 96 % verseift sind, für die Gassperrschicht und dem oben genannten Propylen-Ethylen-Copolymerisat für die Schicht E coextrudiert, nach üblichen Verfahren mit der Basisfolie aus Polypropylen der Dichte 0,905 g/cm$^3$, mit dem Schmelzindex von 2 g/10 min bei 230°C/2,16 kp/cm$^2$ und dem Erweichungsbereich von 160 bis 166°C verbunden und verstreckt, so daß eine Verbundfolie mit einer Längsreckung im Verhältnis 5:1 und einer Querreckung im Verhältnis 10:1 erhalten wurde.

Der Schichtaufbau und die Eigenschaften der fertigen Folie sind in nachfolgenden Tabellen aufgeführt.

## Beispiel 2

Zur Herstellung einer Schichtkombination wurden für die Schicht A in 98,3 Gew.-% eines Propylen-Ethylen-Copolymerisates mit 4,5 Gew.-% Ethylen, der Dichte 0,90 g/cm$^3$, mit dem Schmelzindex 5 g/10 min bei 230°C/2,16 kp/cm$^2$ und dem Kristallitschmelzpunkt 140°C, 0,5 Gew.-% N,N-Bis-(2-hydroxyethyl)-(C$_{12}$-C$_{16}$)-alkylamin, 0,5 Gew.-% eines Ethylen-Methacrylsäure-Copolymeren, bei dem die Carboxylgruppen teilweise über Zn-Salze vorliegen, mit der Dichte von 5 g/10 min bei 190°C/ 1 kp/cm$^2$ und dem Schmelzpunkt von 99°C und 0,7 Gew.-% eines Polydimethylsiloxans der Dichte 0,985 g/cm$^3$ bei 20°C und einer Viskosität von 10$^6$ m Pa. s bei 20°C eingearbeitet und mit einem modifiziertem Propylen/Ethylen-Copolymer wie einem verseiften Mischpolymerisat mit 0,5 Gew.-% aufgepfropften Maleinsäureanhydrid und einem Schmelzindex von 10 g/10 min bei 250°C/2,16 kp/cm$^2$ für die Haftvermittlerschichten und einem Ethylent Vinylacetat-Copolymerisat mit 55 Mol-% Vinylaceteinheiten, die zu 96 % verseift sind, für die Gassperrschicht und dem oben genannten Propylen-Ethylen-Copolymerisat für die Schicht E coextrudiert, nach üblichen Verfahren mit der Basisfolie aus Polypropylen der Dichte 0,905 g/cm$^3$, mit dem Schmelzindex von 2 g/10 min bei 230°C/2,16 kp/cm$^2$ und dem Erweichungsbereich von 160 bis 166°C verbunden und verstreckt, so daß eine Verbundfolie mit einer Längsreckung im Verhältnis 5: 1 und einer Querreckung im Verhältnis 10: 1 erhalten wurde.

Der Schichtaufbau und die Eigenschaften der fertigen Folie sind in nachfolgenden Tabellen aufgeführt.

**Tabelle 1**

| | Beispiel 1 | Vergleichs-beispiel 1 | Beispiel 2 |
|---|---|---|---|
| Schichtauf-bau und Schichtdicke (µm) | P/E-Copo 1<br>HV 0,5<br>EVAL 1<br>P/E-Copo 1<br>HV 0,5<br>PP 25<br>P/E-Copo 1 | P/E-Copo 1<br>HV 0,5<br>EVAL 1<br>P/E-Copo 1<br>HV 0,5<br>PP 25<br>P/E-Copo 1 | P/E-Copo 1<br>HV 0,5<br>EVAL 1<br><br>HV 0,5<br>P/E-Copo 1<br>PP 25<br>P/E-Copo 1<br>HV 0,5<br>EVAL 1<br>HV 0,5<br>P/E-Copo 1 |
| Gesamt-dicke (µm) | 30 | 30 | 33 |
| Additive in Siegelschicht (Gew.-%) | | | |
| Aliphat. Amin | 0,5 | 0,2 | 0,5 |
| Ethylen-Metacryl-säure-Copolymer | 0,5 | — | 0,5 |
| Poly laurin-lactamid | — | — | — |
| Polydimethyl-siloxan | 0,3 | — | 0,7 |
| Erucasäure-amid | — | 0,3 | — |

P/E-Copo = Propylen/Ethylen-Copolymerisat
HV = modifizierte Polyolefine mit polyfunktionellen Gruppen
EVAL = verseiftes Ethylen/Vinylacetat-Copolymerisat
PP = Polypropylen

**Tabelle 2**

| | Beispiel 1 | Vergleichs-beispiel 1 | Beispiel 2 |
|---|---|---|---|
| Folieneigen-schaften | | | |
| Reibzahl Folie/Folie | 0,30 | 0,48 | 0,27 |
| Reibzahl Folie/Metall | 0,20 | 0,35 | 0,17 |
| Trübung (%) | 2,8 | 2,8 | 3,0 |
| Siegelfestig-keit (N/15 mm) | 5 | 5 | 5 |
| O$_2$-Durchläs-sig-keit (cm$^3$/m$^2$.d.bar) | 20 | 20 | 8 |
| Antistatisches Verhalten | ausreichend | nicht ausreichend | ausreichend |
| Verhalten auf der Verpac-kungsmaschi-ne | sehr gut | unbefriedigend | sehr gut |

**Vergleichsbeispiel 1**

Zur Herstellung einer Schichtkombination wurden für die Schicht A in 99,5 Gew.-% eines Propylen-Ethylen-Copolymerisates mit 4,5 Gew.-% Ethylen, der Dichte 0,90 g/cm$^3$, mit dem Schmelzindex 5 g/10 min bei 230°C/2,16 kp/cm$^3$ und dem Kristallitschmelzpunkt 140°C, 0,2 Gew.-% N,N-Bis-(2-hydroxyethyl)-(C$_{12}$-C$_{16}$)-alkylamin und 0,3 Gew.-% Erucasäureamid eingearbeitet und mit einem modifizierten Polypropylen, wie einem verseiften Mischpolymerisat mit 0,7 Gew.-% aufgepfropften Maleinsäureanhydrid und einem Schmelzindex von 5 g/10 min bei 250°C/2,16 kp/cm$^2$ für die Haftvermittlerschichten und einem Ethylen/Vinylacetat-Copolymerisat mit 55 Mol-% Vinylacetateinheiten, die zu 96 % verseift sind, für die Gassperrschicht und dem oben genannten Propylen-Ethylen-Copolymerisat für die Schicht E coextrudiert, nach üblichen Verfahren mit der Basisfolie aus Polypropylen der Dichte 0,905 g/cm$^3$, mit dem Schmelzindex von 2 g/10 min bei 230°C/2,16 kp/cm$^2$ und dem Erweichungsbereich von 160 bis 166°C verbunden und verstreckt, so daß eine Verbundfolie mit einer Längsreckung im Verhältnis 5: 1 und einer Querreckung im Verhältnis 10: 1 erhalten wurde.

Der Schichtaufbau und die Eigenschaften der fertigen Folie sind in nachfolgenden Tabellen aufgeführt.

**Patentansprüche**

1) Heißsiegelbare Verbundfolien mit einer biaxial gereckten Polypropylenfolie als Basisfolie eine Haftvermittlerschicht aus modifiziertem Polyolefin, einer Gassperrschicht aus verseiftem Ethylenvinylacetatcopolymerisat und einer Heißsiegelschicht aus Olefinpolymerüsaten, dadurch gekennzeichnet, daß die Basisfolie mindestens auf einer Oberfläche eine gegebenenfalls wenigstens monoaxial orientierte Schichtkombination trägt, die sich zusammensetzt aus

A) einer heißsiegelaaren Außenschicht aus polyethylen oder einem Ethylencopolymerisat m wenigstens 3 Gew.-% Ethylen;

B) einer Haftvermittlerschicht aus modifiziertem Polyolefin;

C) einer Gassperrschicht aus verseiftem Ethylenvinylacetatcopolymerisat mit 50 bis 80 Mol-% Vinylacetateinheiten, die zu wenigstens 90 % verseift sind;

D) einer Haftvermittlerschicht aus modifiziertem Polyolefin und

E) einer Schicht aus Polyethylen oder einem Ethylencopolymerisat mit wenigstens 3 Gew.-% Ethylen,

wobei die Schicht A eine Additivkombination bestehend aus

a) 0,3 bis 1 Gew.-%, bezogen auf die siegelbar Schicht, eines langkettigen aliphatischen Amins,

b) 0,1 bis 0,7 Gew.-%, bezogen auf die siegelbare Schicht, eines dispergierten, mit dem Polyethylen bzw. Ethylencopolymerisat unverträglichen thermoplastischen Polymeren mit einem Erweichungspunkt im Bereich von max. 50°C unterhalb oder oberhalb des Erweichungspunkts des Polyethylen bzw. Ethylencopolymerisats,

c) 0,1 bis 1,2 Gew.-%, bezogen auf die siegelbare Schicht, eines Polydialkylsiloxans enthält und

die Basisfolie auf ihrer anderen Oberfläche gegebenenfalls eine Schicht A, eine Schichtkombination A bis E oder B und C oder eine Schicht aus einer Mischung aus den Polymeren der Schicht B und C trägt.

2) Verbundfolie nach Anspruch 1, dadurch gekennzeichnet, daß die Schichten A und B und/oder D und E oder die Schichten B und C bzw. C und D zu einer Schicht durch Vermischen der entsprechenden Polymeren vereinigt sind.

3) Verbundfolie nach Anspruch 1 oder 2 dadurch gekennzeichnet, daß die Komponente a) ein N,N-Bis-(hydroxy($C_1$-$C_4$)alkyl)-($C_{12}$-$C_{16}$)-alkylamin ist.

4) Verbundfolie nach Anspruchen 1 bis 3, dadurch gekennzeichnet, daß die Komponente b) ein Polyethylen hoher Dichte, ein Ethylen/Methacylsäure Copolymeres, dessen Carboxylgruppen zumindest teilweise als Alkalimetall oder Zn-Salze vorliegen können, oder Polylaurinlactamid ist.

5) Verbundfolie nach Anspruch 1 - 4, dadurch gekennzeichnet, daß die Komponente c) Polydimethylsiloxan ist.

6) Verbundfolie nach Ansprüchen 1 - 5, dadurch gekennzeichnet, daß die Schicht B aus Polypropylen oder Polyethylen mit aufgepfropften Einheiten von Maleinsäure, Fumarsäure, Itaconsäure oder deren Säurenanhydride, Säureester, Säureamide und Säureimide oder Copolymerisaten von Ethylen mit Acrylsäure, Methacrylsäure, und/oder deren Metallsalzen und/oder deren Alkyl($C_1$-$C_4$)estern oder, entsprechenden Pfropfpolymeren besteht. .

7) Verbundfolie nach Ansprüchen 1 - 6, dadurch gekennzeichnet, daß die Schicht C aus einem Ethylen-Vinylacetat-Copolymerisat besteht, das 60 - 75 Mol-% Vinylacetateinheiten enthält, die zu mehr als 95 % verseift sind.

8) Verbundfolie nach Ansprüchen 1 - 7, dadurch gekennzeichnet, daß die Schichtpolymeren A und E und/oder B und D identisch sind.

9) Verbundfolie nach Ansprüchen 1 - 8, dadurch gekennzeichnet, daß die Schichtkombination durch Laminieren oder Schmelzextrudieren hergestellt sind und die Additivkombination in die Polymeren der Schicht A eingearbeitet ist.

10) Verpackungen, vorzugsweise für Lebensmittel, aus Verbundfolien nach Ansprüchen 1 - 9.

**Revendications**

1. Feuilles composites soudables à chaud comprenant une feuille de polypropylène à étirage biaxial comme feuille de base, une couche de pontage en polyoléfine modifiée, une couche d'arrêt de gaz en copolymère éthylène-acétate de vinyle saponifié et une couche de soudage à chaud en polymères oléfiniques, caractérisées en ce que la feuille de base porte au moins sur une surface un ensemble de couches à orientation, le cas échéent, eu moins mono-axiale, qui se compose

A) d'une couche externe soudable à chaud formée de polyéthylène ou d'un copolymère d'éthylène avec au moins 3 % en poids d'éthylène;

B) d'une couche de pontage en polyoléfine modifiée;

C) d'une couche d'arrêt de gaz en copolymère éthylène-acétate de vinyle saponifié avec 50 à 80 moles % de motifs acétate de vinyle qui sont saponifiés à 90 % au moins;

D) d'une couche de pontage en polyoléfine modifiée; et

E) d'une couche en polyéthylène ou en un copolymère d'éthylène avec au moins 3 % en poids d'éthylène,

la couche A comprenent une association d'additifs formée de

a) 0,3 à 1 % en poids, par rapport à la couche soudable, d'une amine aliphatique à longue chaîne,

b) 0,1 à 0,7 % en poids, par rapport à la couche soudable, d'un polymère thermoplastique dispersé incompatible avec le polyéthylène et le copolymère d'éthylène, ayant un point de ramollissement dans la plage d'un maximum de 50°C au-dessous ou au-dessus du point de ramollissement du polyéthylène ou du copolymère d'éthylène,

c) 0,1 à 1,2 % en poids, par rapport à la couche soudable, d'un polydialkylsiloxane et la feuille de base porte sur son autre surface, le cas échéant, une couche A, un ensemble de couches A à B ou B et C ou une couche d'un mélange des polymères des couches B et C.

2. Feuille composite suivant la revendication 1, caractérisée en ce que les couches A et B et/ou D et E ou les couches B et C et, respectivement, C et D sont réunies en une couche par mélange des polymères correspondants.

3. Feuille composite suivant la revendication 1 ou 2, caractérisée en ce que le composant a) est une N,M-bis-(hydroxy-alkyle en $C_1$ à $C_4$)-(alkylamine en $C_{12}$ à $C_{16}$).

4. Feuille composite suivant les revendications 1 à 3, caractérisée en ce que le composant b) est un polyéthylène haute densité, un copolymère éthylène/acide méthacrylique dont les groupes carboxyle peuvent se présenter au moins en partie sous forme de sels de métal alcalin ou de zinc, ou un polylactamide laurique.

5. Feuille composite suivant les revendications 1 à 4, caractérisée en ce que le composant c) est un polydiméthylsiloxane.

6. Feuille composite suivant les revendications 1 à 5, caractérisée en ce que la couche B est en polypropylène ou en polyéthylène à motifs greffés d'acide maléique, d'acide fumarique, d'acide itaconique ou de leurs anhydrides d'acides leurs esters d'acides, leurs amides d'acides et leurs imides d'acides ou en copolymères d'éthylène avec l'acide acrylique, l'acide méthacrylique et/ou leurs sels métalliques et/ou leurs esters d'alkyle en $C_1$ à $C_4$ ou en polymères greffés correspondants.

7. Feuille composite suivant les revendications 1 à 6, caractérisée en ce que la couche C est en un copolymère éthylène-acétate de vinyle qui contient 60 à 75 moles % de motifs acétate de vinyle qui sont saponifiés à plus de 95 %.

8. Feuille composite suivant les revendications 1 à 7, caractérisée en ce que les polymères des couches A et E et/ou B et D sont identiques.

9. Feuille composite suivant la revendication 1, caractérisée en ce que l'ensemble de couches est produit par stratification ou extrusion à l'état fondu et l'association d'additifs est incorporée aux polymères de la couche A.

10. Emballages, de prgférence pour aliments, formés de feuilles composites suivant les revendications 1 à 9.

**Claims**

1. Heat-sealable composite films having a biaxially stretched polypropylene film as the base film, an adhesion-promoting layer of modified polyolefin, a gas-barrier layer of hydrolysed ethylene/ vinyl acetate copolymer and a heat-sealing layer of olefin polymers, characterised in that the base film carries on at least one surface an optionally at least monoaxially orientated layer combination which is composed of

A) a heat-sealable outer layer of polyethylene or of an ethylene copolymer containing at least 3% by weight of ethylene;

B) an adhesion-promoting layer of modified polyolefin;

C) a gas barrier layer of hydrolysed ethylene/vinyl acetate copolymer containing 50 to 80 nol % of vinyl acetate units of which at least 90% are hydrolysed;

D) an adhesion-promoting layer of modified polyolefin and

E) a layer of polyethylene or of an ethylene copolymer containing at least 3% by weight of ethylene,

wherein layer A contains an additive combination consisting of

a) 0.3 to 1% by weight, based on the sealable layer, of a long-chain aliphatic amine,

b) 0.1 to 0.7% by weight, based on the sealable layer, of a dispersed thermoplastic polymer which is incompatible with the polyethylene or ethylene copolymer and which has a softening point in the range of at most 50°C below or above the softening point of the polyethylene or ethylene copolymer,

c) 0.1 to 1.2% by weight, based on the sealab layer, of a polydialkyl siloxane and

the base film optionally carries on its other surface a layer A, a layer combination A to E or and C or one layer of a mixture of the polymers layer B and C.

2. Composite film according to Claim 1, characterised in that layers A and B and/or D ar E or the layers B and C or C and D are combinec to form one layer by mixing the corresponding polymers.

3. Composite film according to Claim 1 or 2, characterised in that component a) is an N,N-bi (hydroxy($C_1$-$C_4$)alkyl) ($C_{12}$ $C_{16}$)-alkylamine.

4. Composite film according to Claims 1 to 3, characterised in that component b) is a polyethylene of high density, an ethylene/ methacrylic acid copolymer, the carboxyl grou of which can be present, at least partly, in the form of alkali metal or Zn salts, or polylauric lactamide.

5. Composite film according to Claim 1 - 4, characterised in that component c) is polydimethyl siloxane.

6. Composite film according to Claims 1 - 5, characterised in that layer B consists of polypropylene or polyethylene containing grafred-on units of maleic acid, fumaric acid, itaconic acid, or their acid anhydrides, acid esters, acid amides and acid imides or copolynars of ethylene with acrylic acid, methacrylic acid, and/or their metal salts and/o their alkyl($C_1$-$C_4$) esters or correspondinggraft polymers.

7. Composite film according to Claims 1 - 6, characterised in that layer C consists of an ethylene/vinyl acetate copolymer which contaii 60 - 75 mol % of vinyl acetate units, more than 95% of which are hydrolysed.

8. Composite film according to Claims 1 - 7, characterised in that the layer polymers A and I and/or B and D are identical.

9. Composite film according to Claims 1 - 8, characterised in that the layer combination is produced by lamination or. melt-extrusion and the additive combination is incorporated in the polymers of layer A.

10. Packings, preferably for foodstuffs, consisting of composite films according to Clai 1 - 9.